# EUROPEAN PATENT APPLICATION

(11) **EP 1 186 241 A1**
(43) Date of publication of application: **13.03.2002**
(21) Application number: 01307595.7
(22) Date of filing: 07.09.2001
(51) Int. Cl.: A23G 9/28

(54) **Ice cream vending machine**

(30) Priority: 09.09.2000 KR 2000053840; 25.06.2001 KR 2001036276
(71) Applicant: Samsung Kwangju Electronics Co., Ltd., Kwangju-city (KR)
(72) Inventor: Han, Hong-suk, Kwangsan-gu, Kwangju-city (KR); Ryoo, To-Suck, Kwangju-city (KR)
(74) Representative: Blatchford, William Michael

(57) **Abstract**

An ice cream vending machine is capable of vending ice cream immediately, when supplied with an ice cream supply, and which can be kept free of contamination due to leakage of liquid ice cream. The machine includes a cooling system (20), a freezing chamber (30) cooled by the cooling system, a canister (40) arranged within the freezing chamber for holding bead type ice cream, a cup supplying device (50) arranged outside the freezing chamber for supplying a cup to hold the bead type ice cream, and an ice cream discharging device (60) for discharging the bead type ice cream from the canister to the cup.

## Description

The present invention relates to an ice cream vending machine, and more particularly to an ice cream vending machine for vending ice cream whilst the machine is unattended.

Korean Utility Model Publication No. 96-32433 discloses an ice cream vending machine that produces soft type ice cream from a liquid composition and dispenses the soft type ice cream to a customer.

In this prior ice cream vending machine, the ice cream is of a liquid composition and is stored in a canister. The liquid composition is frozen into ice cream by a refrigeration system, and in operation, a coin is fed into the machine and a selection button pressed. A valve is then opened to discharge the ice cream.

However, there is a disadvantage with this prior machine in that it takes a considerable amount of time from the time of supply of the liquid composition of ice cream, up to the formation of the soft type ice cream by means of the refrigeration system. Of course, until the formation of the soft type ice cream, sale of the ice cream is not possible. Further, if the valve is opened accidentally, for example due to a mistake made by a machine operator, the liquid composition spills, contaminating the vending machine and the surrounding area.

Also, in the conventional ice cream vending machine, the soft type ice cream formed by the refrigeration system is continuously conveyed through a discharge passage and valve by a conveying screw. Since the discharge passage is always filled with ice cream and the cooling effect of the refrigeration system does not completely extend to the discharging passage, sometimes, and especially in hot weather, the ice cream melts and thus fresh ice cream is not dispensed. Further, in the conventional ice cream vending machine, since the ice cream is continuously supplied through the valve, ice cream always remains in the valve, and thus hygiene is compromised.

Accordingly, it is an aim of the present invention to provide an improved ice cream vending machine.

According to a first aspect of the present invention, there is provided an ice cream vending machine, comprising: a cooling system; a freezing chamber cooled by the cooling system; a canister arranged within the freezing chamber, and arranged to hold bead type ice cream; a cup supplying device arranged externally to the freezing chamber and arranged to supply a cup for holding the bead type ice cream; and an ice cream discharging device for discharging the bead type ice cream from the canister to a cup in the cup supplying device.

According to a second aspect of the present invention, there is provided an ice cream vending machine comprising: a chamber for storing ice cream in granular form; and means for dispensing the granular ice cream from the chamber.

It is preferable that the freezing chamber is maintained at a temperature ranging from -27°C to -43°C. Also, the bead type ice cream preferably has a diameter ranging from approximately 3mm to 7mm. The cup may have a spoon attached to a lower side of the cup, for the convenience of customers. Also, the ice cream discharging device may include a spiral spring.

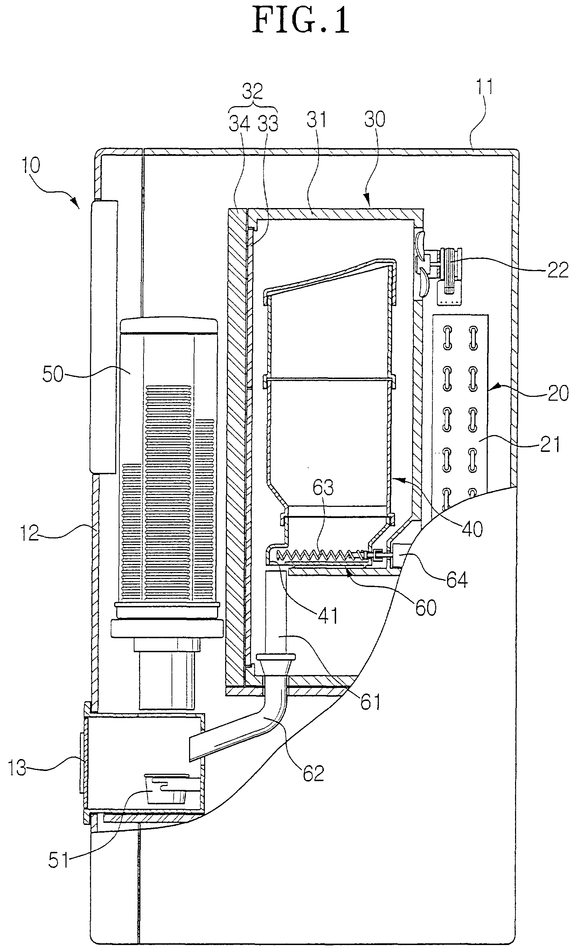

The invention will now be described, by way of example, with reference to the accompanying drawing, in which the Figure is a partial side-sectional view showing an ice cream vending machine in accordance with the present invention.

Referring to the Figure, an ice cream vending machine in accordance with the present invention, includes a casing 10, a cooling system 20, a freezing chamber 30, a canister 40, a cup supplying device 50, and an ice cream discharging device 60.

The casing 10 includes a casing body 11 having an open front side, and a front door 12 movably connected to the front of the casing body 11 so as to enable opening and closing of the casing body 11. On a rear surface of the front door 12 are formed a banknote distinguisher (not shown), a coin mechanism (not shown), and a controller (not shown).

The cooling system 20 is arranged on a lower rear portion of the casing body 11, and includes a compressor (not shown), a condenser (not shown), a drier (not shown), a capillary tube (not shown), and an evaporator 21. The construction and operation of the cooling system 20 is identical to the construction and operation of a general refrigeration system.

A freezing chamber 30 is provided within the casing body 11. For heat insulating efficiency, it is preferable that the freezing chamber 30 is spaced apart from an inner wall of the casing body 11, and is heat-insulated by an adiabatic material (not shown).

The freezing chamber 30 includes a freezing chamber body 31 having an open front side, and a freezing chamber door 32 movably connected to the front of the freezing chamber body 31, to enable opening and closing of the freezing chamber 30. For heat insulating efficiency, the freezing chamber door 32 has a double structure, with an inner door 33, and an outer door 34.

Depending on usage, the inner space of the freezing chamber 30 can be divided into a plurality of chambers, and accordingly, the inner door 33 can be formed in a plurality of pieces. On a rear portion of the freezing chamber 30 is situated the evaporator 21 of the cooling system 20.

Once cooled in the evaporator 21 of the cooling system 20, cool air is blown into the freezing chamber 30 by a blower 22. Taking cooling efficiency into account, the blower 22 is preferably located on an upper portion of the freezing chamber body 31.

Within the freezing chamber 30, a canister or hopper 40 is provided, the canister being filled with bead type ice cream. Bead type ice cream is ice cream which is made in the shape of granules having an approximate diameter of from 3mm to 7mm.

In order to maintain the shape of the bead type ice cream stored in the canister, the freezing chamber 30 is maintained at a temperature ranging from -43°C to -27°C. Apart from the fact that the ice cream is in the form of granules, the ice cream is identical to conventional ice cream.

Outside the freezing chamber 30, the cup supplying device 50 is arranged to supply a cup 51 for holding the bead type ice cream. Since the construction and operation of the cup supplying device 50 is identical to that of cup supplying devices of general vending machines, description thereof is not necessary.

Below the cup 51, which cup is shown in the Figure to have been supplied by the cup supplying device 50, a spoon (not shown) is attached for the convenience of a customer. Accordingly, the customer may scoop the ice cream with the spoon.

On the lower portion of the canister 40, the ice cream discharging device 60 is provided. The ice cream discharging device 60 discharges the bead type ice cream through a chute 61 and a discharge passage 62, into the cup 51.

The ice cream discharging device 60 includes a spiral discharging screw in the form of a spring 63. The discharging spring 63 is rotatably mounted on a lower rear wall of the canister 40. One end of the spiral discharging spring 63 is connected to the rotary shaft of a motor 64, mounted in the freezing chamber 30.

As will be appreciated, the ice cream can be sold immediately after the ice cream has been deposited in the canister 40. Also, there is no problem of contamination of the vending machine, or surrounding components, due to leakage of a liquid ice cream composition.

The operation of the ice cream vending machine will now be described.

When a customer feeds a coin of a predetermined amount into the vending machine, and presses the selection button (not shown) on the front door 12, initially, the cup 51 is supplied to a predetermined position in the discharging passage 62, by the cup supplying device 50.

Next, the motor 64 is driven, and the discharging spring 63 is rotated. Due to the rotation of the spiral discharging spring 63, beads of ice cream are transported between the turns of the spring from the bottom of the canister in the direction of the discharging port 41 formed on the lower portion of the canister 40. The ice cream beads fall down to the chute 61 through the discharging port 41.

After the bead type ice cream is conveyed to the chute 61, the ice cream falls down and into the cup 51 through the discharging passage 62 and, accordingly, the customer may remove the cup 51 through an opening 13 of the front door 12, and consume the ice cream using the spoon which is attached to the lower surface of the cup 51.

It will be understood that, once the bead type ice cream has fallen into the chute 61, the ice cream then falls into the cup 51 through the discharging passage 62. In other words, the ice cream is conveyed in a non-continuous, or inconsistent manner. Accordingly, when the vending machine is not in vending operation, components other than the canister 40, i.e., the chute 61 and the discharging passage 62, do not contain ice cream or residual ice cream. Accordingly, there is improved hygiene. Since bead type ice cream is used, the ice cream can be dispensed and sold as soon as the ice cream is supplied to the vending machine, and also, contamination of the vending machine or of the surrounding components due to leakage of liquid ice cream composition is largely avoided. Furthermore, since there is no ice cream or residual ice cream remaining in components such as the chute 61 and the discharge passage 62 when the vending machine is not in vending operation, fresh ice cream can always be served.

## Claims

1. An ice cream vending machine, comprising:
a cooling system;
a freezing chamber cooled by the cooling system;
a canister arranged within the freezing chamber, and arranged to hold bead type ice cream;
a cup supplying device arranged external to the freezing chamber and arranged to supply a cup for holding the bead type ice cream; and
an ice cream discharging device for discharging the bead type ice cream from the canister to a cup supplied from the cup supplying device.

2. The vending machine according to claim 1, wherein the freezing chamber is arranged to be maintained at a temperature ranging from approximately -43°C to -27°C.

3. The vending machine according to claim 1 or claim 2, wherein the machine is arranged to hold bead type ice cream having a diameter ranging from approximately 3mm to 7mm.

4. The vending machine according to any preceding claim, wherein a cup in the cup supplying device is provided, having a spoon attached to a lower side thereof.

5. The vending machine according to any preceding claim, wherein the ice cream discharging device includes a spiral spring.

6. An ice cream vending machine comprising:
a chamber for storing ice cream in granular form; and
means for dispensing the granular ice cream from the chamber.

7. An ice cream vending machine according to claim 6, wherein the chamber includes a cooling system arranged to be maintained at a temperature of between -27°C and -43°C.

8. An ice cream vending machine according to claim 6 or claim 7, wherein the dispensing means comprises a hopper having a chute through which the granular ice cream is controllably ejected.

9. An ice cream vending machine according to claim 8, wherein the dispensing means further comprises a generally helical member, arranged such that rotation of the helical member causes the granular ice cream to be urged towards the chute.
